# EUROPEAN PATENT SPECIFICATION

(11) **EP 1 379 045 B1**
(45) Date of publication and mention of the grant of the patent: **10.10.2007**
(21) Application number: 02014571.0
(22) Date of filing: 01.07.2002
(51) Int. Cl.: H04L 29/06

(54) **Arrangement and method for protecting end user data**
Anordnung und Verfahren zum Schutz von Endbenutzerdaten
Dispositif et procédé pour la protection de données utilisateur final

(43) Date of publication of application: 07.01.2004
(73) Proprietor: TELEFONAKTIEBOLAGET LM ERICSSON (publ), 164 83 Stockholm (SE)
(72) Inventor: Lindskog, Helena, 654 63 Karlstad (SE); Nilsson, Mikael, 652 20 Karlstad (SE)
(74) Representative: Norin, Klas

(56) References cited:
- WO-A-00/51031
- WO-A-00/52900
- WO-A-01/43033
- US-A- 6 005 939
- JÖRG MEYER : "How to manage, negotiate, and transfer personal information on the Web" [Online] March 1999 (1999-03) , DIPLOMA THESIS, UNIVERSITY OF APPLIED SCIENCES , HAMBURG, GERMANY XP002215640 Retrieved from the Internet: <URL: http://www.almaden.ibm.com/cs/wbi/papers/p 3p/ThesisJM.pdf> [retrieved on 2002-10-03] Chapter 2, 5.2.3 Proxies and Secured Connections

## Description

### TECHNICAL FIELD

The present invention relates to an arrangement and a method respectively for protection of end user data, more generally of end user personal profile data in a communication system comprising a number of end user stations and a number of service/information/content providers.

### STATE OF THE ART

End user personal profile data tends to get more and more spread out at different locations e.g. on Internet. With the fast development of global data communication networks, it gets possible to distribute data both via fixed and via wireless applications. Data will also be pushed out to an even higher extent than hitherto, e.g. from companies to end users, other companies etc. Internet end users, mobile as well as non-mobile, have to rely on and trust service providers. The service providers, in turn, require that the end users provide a lot of personal information in order to be able to serve the end users properly, and possibly for other reasons. However, the personal information can easily be misused, consciously or unconsciously, but still very little is done to protect the privacy rights of the end users. This is a serious problem. This will also have as a consequence that fewer end users sign up to, or take advantage of, all services that could be useful for them, which also is disadvantageous. The need for means to protect privacy therefore increases. For the individual end user it is exceedingly important that his personal information can be protected from uncontrolled distribution among service providers, other end users, companies etc. At the same time as, for example, the number of services that can be provided to end users, over for example Internet, increases, it becomes more and more interesting for service and information providers to be able to obtain detailed information about users. This may be in conflict with the security (e.g. privacy) aspect for the end users, as well as it of course also may be attractive for the end users, since they can also take advantage of personal information being spread out, and thereby obtain other useful or desired information etc. For statistical purposes it is interesting for e.g. companies to get information in order to become familiar with the needs for services, products etc. An end user may today have stored personal profile data of different kinds, at different locations, which contains various kinds of information about the user, such as name, address, particular habits, hobbies, accounts, financial situation etc. Thus, it is exceedingly important for the service/content providers to know the characteristics of existing and potential customers to allow for targeted advertising etc., at the same time as it is also exceedingly important for the end user to be able to properly protect the personal profile data.

Thus there is an inherent conflict between different interests. Therefore laws and regulations have been created in an increasing number of countries, such as for example within the European Union, to restrict the accessibility to privacy information. Such laws and regulations often vary from one country to another, but generally they have in common that the consumer or the end user should have control over his or her profile, including conditions for its release.

Solutions have been suggested for systems for protecting user personal profile data acting as a kind of a safe or functioning as a profile repository. The profiles can, by replacement of the user identity, for example the mobile phone number, through a code, be stored such that there will be no connection to the user identity, throughout the network. Such a repository or storing means for user profiles can be arranged at different nodes within the network. One example relates to a profile holding means provided between a portal and an advertising node. It is then supposed that the personal profile has been transferred to the advertising node, with the user identity in the form of a mobile phone number (MSISDN) replaced by a code, which is totally unrelated to the phone number. The procedure will then be that the portal requests an advertisement for a user, e.g. with a phone number. The profile holding means then forwards the request to the advertising node with the mobile phone number converted into a corresponding code. The advertising node subsequently returns the advertisement to the personal profile holding means, which subsequently returns the advertisement to the portal. Such a system is for example known under the trademark Respect ^{™} which is an e-business platform enabling privacy control, identity management and instant personalization for on-line transactions. The profile holding means is then represented by the Respect ^{™} server which is a virtual infrastructure located at the mobile Internet provider.

However, there are several problems associated with systems as described above. One main issue is the transactional capacity of the profile protecting means. Normally the number of users that can be handled is limited, which results in serious problems for real time applications. With reference to the example given above, advertisements have to be served when an end user actually visits a particular page, or accesses a particular service, and many operations are time-critical. The time criticality is particularly important in wireless environments.

US Patent 6,005,939 shows a method and an arrangement for allowing access to an Internet web site. A user specifies particular information once and the information can be used each time the user accesses any site on the public network.

A passport system is used which has a single repository of user information and a passport access provider for accessing the user information (in the repository) and for providing a passport to a requester. A passport agent (comprising a passport server and a passport database) is connected to the Internet. A user stores information therein once, and can (optionally) be assigned a security level for each item of information. The agent includes a security/authentication function.

If a user wants to conduct a transaction at a web site, he requests with an encrypted message the passport agent to release specific user information to the web site. The agent has previously been provided with a decryption key, and decrypts the request to determine to which web site a passport is to be sent. Encrypted data is then provided by the agent to the web site, which has already received a public key from the user, so that the web site can decode the encrypted data.

However, this system is not secure enough, and particularly not flexible enough at the same time as personal data is secured. Furthermore there is substantially, no way for a service provider, duly considering users security requirements, to serve the user in an optimized manner according to users preferences or needs.

It is certain that complete protection of end user personal profile data can never be guaranteed, any solution can in principle be cracked by a malicious partly, but the suggestions made so far leave a lot to desire.

### SUMMARY OF THE INVENTION

It is therefore an object of the present invention to provide an arrangement and a method respectively through which end user personal (profile) data can be protected to a high extent, particularly as much as required by most end users still wanting to make use of, and take advantage of, available services. It is also an object of the invention to provide an arrangement that makes it possible for an end user to trust a service provider to such an extent that the service provider is allowed to use personal data e.g. for statistical and other purposes while still providing the end user with the satisfaction that the data hardly can be abused of.

Further yet it is an object to provide a solution through which end user data can be provided by the end user to such an extent that also the service provider can use the data to an extent so as to be able to optimally serve the end user. It is particularly an object to provide a solution through which an agreement can be established between end user and service provider which is very difficult to break. It is a general and main object of the invention to provide an arrangement and a method respectively which make abuse of personal data extremely difficult and unlikely to happen and such that the end user can feel confident when giving away personal data.

Therefore an arrangement and a method having the features of the independent claims are suggested. Advantageous implementations are given by the appended sub-claims.

### BRIEF DESCRIPTION OF THE DRAWINGS

The invention will in the following be more thoroughly described, in a non-limiting manner, and with reference to the accompanying drawings, in which:
- Fig. 1: is a schematical block diagram illustrating the inventive concept,
- Fig. 2A: is a block diagram describing one implementation of the inventive concept,
- Fig. 2B: is a block diagram describing another implementation of the inventive concept,
- Fig. 3: is a communication diagram illustrating the flow of messages according to a first implementation,
- Fig. 4: is a diagram illustrating the flow of messages according to second embodiment,
- Fig. 5: is a diagram illustrating the flow of messages indicating four different implementations,
- Fig. 6: describes the procedure illustrating the use of a protection server, and
- Fig. 7: is a flow diagram describing one implementation of the inventive concept.

### DETAILED DESCRIPTION OF THE INVENTION

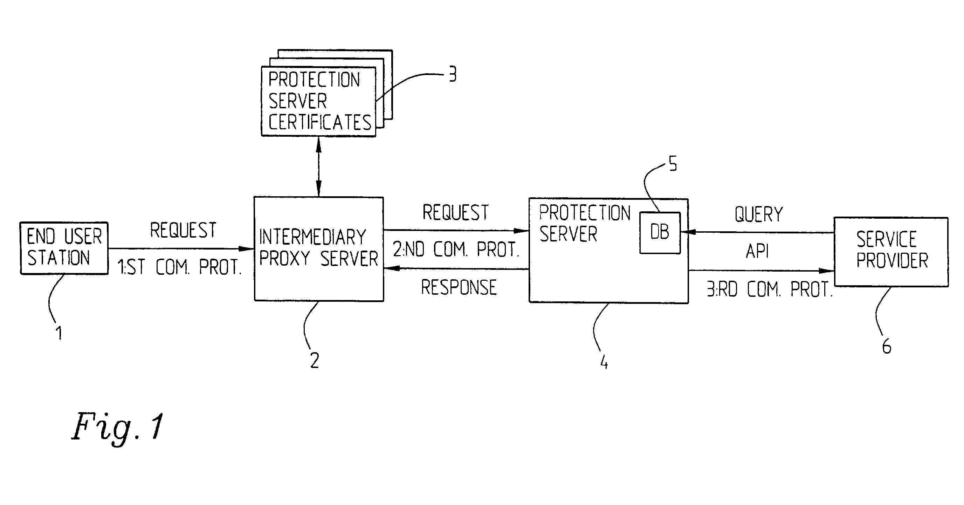

Fig. 1 is a general overview of a basic implementation of the inventive concept. The arrangement comprises an intermediary proxy server 2 supporting a first communication protocol for end user station (user agent) 1 communication. Intermediary proxy server 2 is in one embodiment within the personal environment of the end user, e.g. a home PC. In an alternative embodiment it is located within an intranet. According to still another embodiment it is located at the operator's premises. The intermediary proxy server also supports a second communication protocol for communication with a protection server 4.

In one implementation a certificate of the protection server 4 is registered at a trusted third-party, such as the operator having sold it and protection server certificates are somehow made available to the intermediary proxy server 2. The task of the intermediary proxy server is to verify the genuinity of a protection server 4 for example through requesting a certificate and, in a particular implementation, signed content from the protection server 4 over the second communication protocol and comparing it with published certificates stored in certificate storing means 3. It should be clear that the verification of the genuinity (e.g. authenticity) of the protection server can also be done in other manners by the intermediary proxy server.

The first communication protocol may be a secure protocol but it is not necessary for the functioning of the inventive concept. Also the second communication protocol may be a secure protocol, e.g. IPSec or HTTPS but it is also not necessary. Both the first and the second communication protocols can be so called secure protocols but neither of them has to be it, alternatively one of them, either the first or the second, may be a secure protocol. Any variation is in principle possible. The protection server 4 is in one implementation a HTTP proxy comprising a database 5 with tables holding information according to the relevant policy in order to be able to provide the service provider with what is needed and available according to the policy. The protection server comprises a query API (Application Programming Interface) in order to allow for queries or questions being asked to the database. The protection server further comprises a simple administration API so that an IP number can be set and such that changes can be made to the privacy policy files of the service provider. When the protection server 4 is purchased, in one implementation, its certificate is registered, as referred to above, at a trusted third-party. The protection server 4 communicates with the service provider over a third communication protocol, e.g. HTTP.

In one implementation the end user preferences are held in the intermediary proxy server 2. However, in an alternative implementation the user preferences are held at the end user station. Still further the end user preferences may be agreed upon with the user klicking through them. After the negotiation they can be cached or stored such that the agreement can be handled quicker at a subsequent time. No change wanted may for example mean OK. In general the protection server should provide an API giving the service provider the possibility to change the policies of sites and pages taking the level of privacy into consideration, such that if for example the level of privacy is raised, the affected data should be deleted etc. Furthermore the protection server 4 must provide responses upon request to the intermediary proxy server 2, e.g. as far as certificates, possibly signatures etc. are concerned. Furthermore it should provide responses to requests for agreements relating to policy files and/or natural language statements to the intermediary proxy server 2. Still further it provides a query API to which questions can be asked by the service provider according to the policy settings.

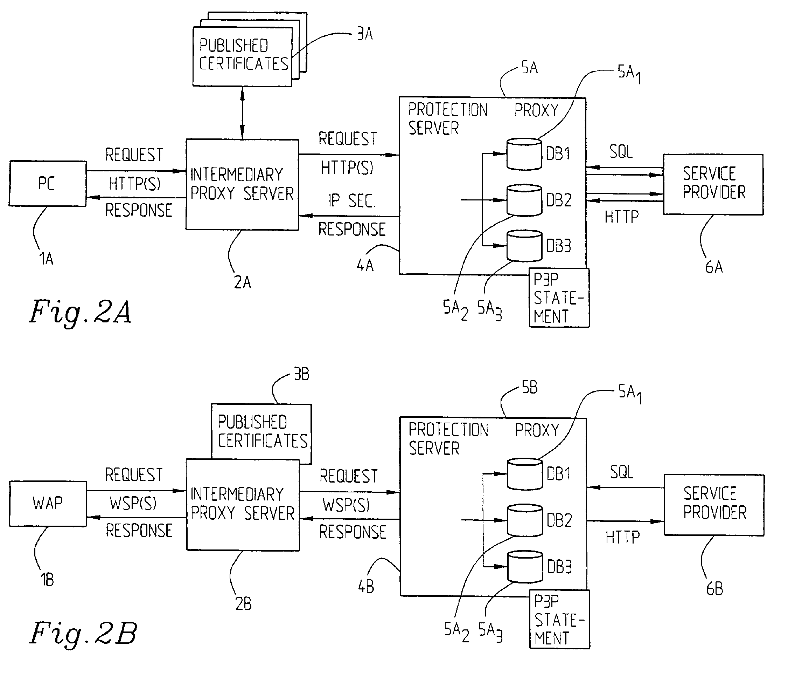

Fig. 2A shows, in a somewhat more detailed manner, one implementation of the inventive concept. It is here supposed that the intermediary proxy server 2A is in communication with holding means holding published certificates 3A. The end user station here comprises a PC 1A sending requests to the intermediary proxy server using HTTP(S). The functioning is the same as above. The protection proxy server 4A comprises storing means with three tables or three separate databases DB1 5A₁, DB2 5A₂, DB3 5A₃. It should be clear that the number of tables is not limited to three but any relevant number of tables or separate holding means can be implemented; different tables in one and the same database relates to one implementation.

The protection proxy server 4A has an SQL allowing questions to be asked to the data base (es) 5A₁, 5A₂, 5A₃ from the service provider (application) 6A. (It should be clear that SQL merely constitutes one example among others, e.g. LDAP (Lightweight Directory Access Protocol). It is supposed that the intermediary proxy server 2A requests a certificate and signed content from the protection proxy server 4A over an IPSec connection (or some other connection), verifies that the certificate belongs to a protection proxy server with the trusted third-party, by comparing the requested certificate with the published certificates available from certificate holding means 3A, which may be actual holding means, or over Internet or in any other manner. It is actually not necessary to implement any handling of certificates, a list of protection servers may also be available over Internet, for example. It is also supposed that, in this implementation, the intermediary proxy server 2A performs a P3P (Platform for Privacy Preferences Project) agreement, which specifies a protocol that provides an automated way for users to gain control over the use of personal data on visited web-sites. The invention covers security communication agreements in general, e.g. P3P, national language agreements etc. used within the field of privacy. According to that web-sites are enabled to express their privacy practices in a machine readable XML (Extensible Markup Language) format that can be automatically retrieved and compared with an end user's privacy preferences. This makes it possible for an end user to make a decision as to submit or not a piece of personal information to a particular web-site. As referred to above, the user's preferences may be in the intermediary proxy server 2A or in the end user device PC 1A or agreed upon as the end user klicks them through. Storing or cashing may be implemented or not as also discussed above. After performing the P3P agreement, if the genuinity of the protection server etc. has been established, the actual web-page may be requested with the full or acceptable profile of the user. Actually also personal data such as name, address etc. can be sent since the protection server can be trusted to handle the data correctly and in a manner acceptable to the end user.

As referred to above the protection server 4A provides an API giving the service provider the possibility to change the policies of the sites and pages and if the level of privacy is raised, the affected data should be deleted. In addition to responding to requests for certificates and signatures, the protection server 4A responds to requests for P3P reference and policy files and/or natural language statements. According to the policy settings, the service provider may then ask questions over the SQL API to the protection server according to the policy settings, for example relating to user specific data such as name, address, purchased items etc., which then can be retrieved, since the protection server is trustworthy. It may also be possible to retrieve profile information, in particular implementations with history information. Further yet the service provider may retrieve statistical data, however, in such a manner, that a specific end user cannot be tracked.

In a particular implementation statistical information and profile information is pseudonymized and anonymized in an appropriate manner, e.g. it may be stored and retrieved using a oneway hash function to ensure privacy and security also in case the protection server actually is broken into or similar.

Particularly the protection server requests the certificate and the signature from the service provider 6A. The protection proxy server 4A may pseudonymize a request (over HTTP) over the URL (Uniform Resource Locator) of the service provider. A new pseudo (e.g. a counter) has to be used for each new URL that is requested. The data that the policy file claims to use, must be sent along with the request. Particularly the protection server assures that personal data is not passed on in such a way that the profile information can be tied to the user. If for example a page wants to store some kind of user specific data, the user identity provided with the request is used to store the information in the protection server. When information is to be retrieved, however, it is important that the request comes from a page where profile information was not retrieved, in order to ensure security (the desired degree of privacy according to the policy).

Fig. 2B is a figure similar to that of Fig. 2A, but implemented for an end user station comprising a WAP (Wireless Application Protocol) device 1B instead. Then WSP (Wireless Session Protocol) is used, secure version or not. Intermediary proxy server 2B functions similar to intermediary proxy server 2A described above. It is here supposed that published certificates are held in certificate holding means 3B associated with intermediary proxy server. Particularly the intermediary proxy server and the holding means for published certificates are at the operators premises. This is however not necessarily the case, see Fig. 2A etc. Also between the intermediary proxy server and the protection proxy server WSP (secure or not) is used. In other aspects the functioning is similar to that described with reference to Fig. 2A.

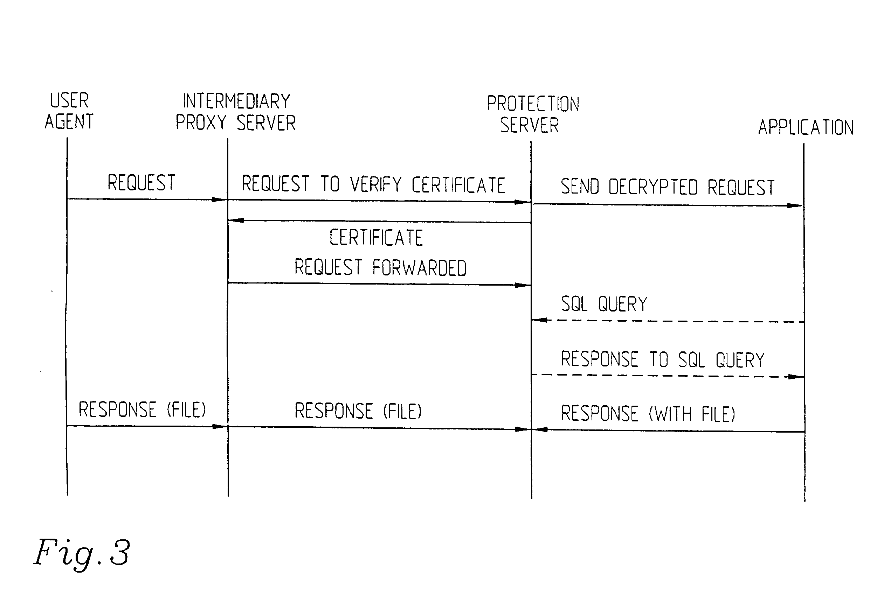

Fig. 3 is a diagram describing the communication between user agent (end user station), intermediary proxy server, protection server and application according to one implementation. It is here supposed that a request is sent from the user agent (which is not required to have any specific intelligence) to the intermediary proxy server, e.g. an ISP (Internet Service Provider). The intermediary proxy server sends a request for a certificate to the protection server, receives it and verifies it as explained above (not all steps explicitly indicated in the figure). The request is then forwarded to the protection server. Subsequently a decrypted request is sent to the application which responds with a file to the protection server. The response is forwarded to the intermediary proxy server and from there on to the user agent. SQL queries (e.g.) from the application to the protection server and responses thereto are indicated with dashed lines since it is intended to indicate that such may be provided or not, the main thing being that such a functionality is enabled and if none, one, or more such queries are actually sent, is irrelevant as long as the possibility is open to the application, or the service provider.

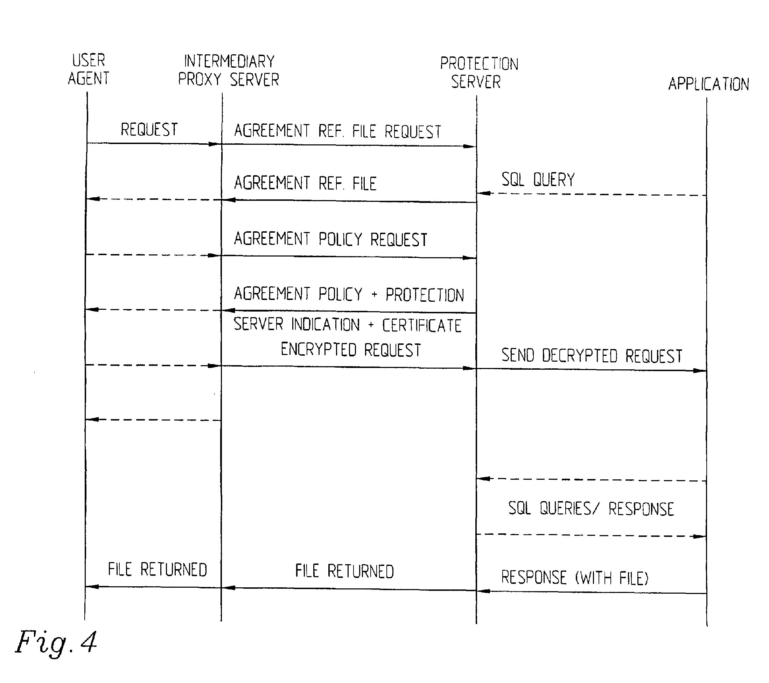

Fig. 4 illustrates another embodiment in which a request is sent from the user agent to the intermediary proxy server, which then sends a request for an agreement reference file to the protection server. The latter then returns an agreement reference file to the intermediary proxy server. Subsequently the intermediary proxy server requests an agreement policy from the protection server which returns an agreement policy, a protection server indicator and a certificate. Subsequently the intermediary proxy server sends an encrypted (with the certificate) request to the protection server which forwards said request (decrypted) to the application. SQL queries are, like in the preceding figure, indicated through dashed lines. The application server provides a response with the requested file, which via the protection server and the intermediary proxy server, is returned to the user agent. The requests for agreement reference file and agreement policy etc. can be sent from the intermediary proxy server without the user agent being involved but, as indicated through the dashed lines, the user agent may also be involved, i.e. having intelligence and functionality to handle such requests. Alternatively this is handled transparently for the user agent, which does not comprise any particular intelligence or software for such actions. If the policy is changed to a lower level, data should be deleted.

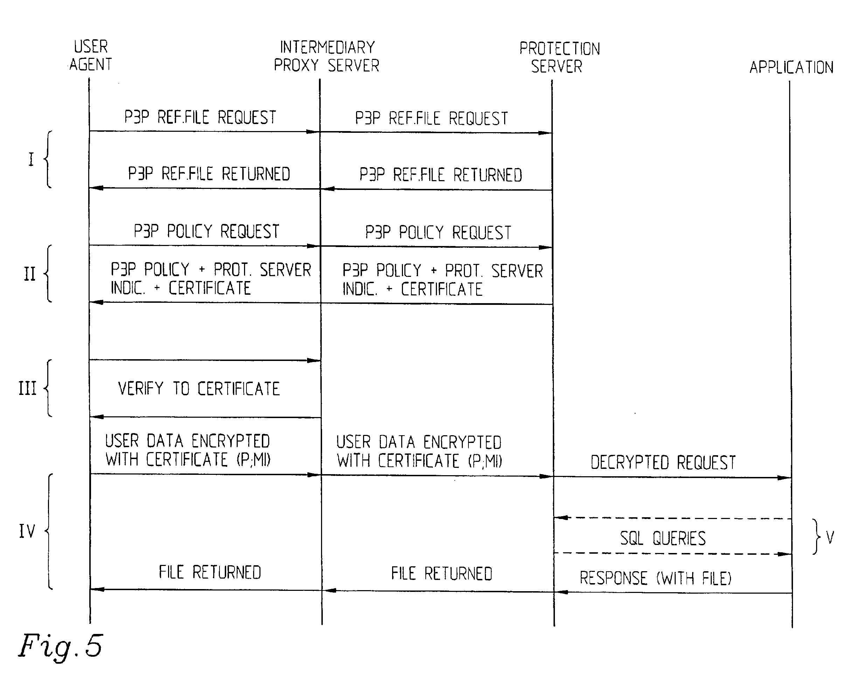

Fig. 5 is also a diagram illustrating the communication between user agent, intermediary proxy server, protection server and application server. Depending on whether, here, P3P is implemented or not or if certificate verification is implemented or not, one or more of steps I, II, III, IV are implemented. In a first implementation it is supposed that P3P is implemented as well as certificate verification and that the user agent comprises a certain intelligence. Thus a P3P reference file request is sent from the user agent to the intermediary proxy server, which forwards the request to the protection server. The protection server then returns a P3P reference file to the intermediary proxy server, which in turn returns it to the user agent. (Step I) Subsequently the user agent sends a P3P policy request, which is forwarded from the intermediary proxy server to the protection server, which then returns a P3P policy and a protection server indicator indicating the specific protection server and a certificate. This response is forwarded from the intermediary proxy server to the user agent. This corresponds to step II. A verification of this certificate is then performed, as a request to that effect is received in the intermediary server to the protection server, step III. Finally user data encrypted with the certificate is sent from the user agent via the intermediary proxy server to the protection server, e.g. according to the method as described in the patent publication No. US 2003/0041100, "Method for limiting conveyance information of user profile within mobile Internet transactions" filed in the US on August 23, 2001. A decrypted request is then sent on to the application which responds with a file to the protection server and the file is subsequently returned to the user agent via the intermediary proxy server, step IV. SQL queries (V), i.e. queries from the application to the protection server can be sent to and responded to according to the policy settings and privacy settings as explained above.

In another implementation it is supposed that P3P is not implemented. Then only steps III, IV are used. In still another implementation it is supposed that the certificate verification is omitted, actually relying on the protection server being "genuine". In that case only steps I, II and IV are implemented, and still supposing that P3P is implemented. Finally the user agent may be unaware of the protection server and P3P and thus sends a request to the application. In particular this is a request with user data. (Simple requests from the user agent i.e. without user data are illustrated in Figs. 3,4). In order to be able to send user data along with the request this presupposes an "intelligent" user agent as referred to above, which is capable of introducing data in the request. The data information is then introduced directly in the header (CC/PP, HTTP header). This is actually based on the user agent fetching the policy, cf. the patent application referred to above, XML is used and via XML tags information is acquired about which data that is needed and the relevant policy. The user agent then reads the policy, establishes what is needed and sends the relevant data straight away, which is extremely advantageous.

The US patent application referred to generally relates to a method for contacting an origin server from a user, by generating a minimal user profile for the user, which profile contains user designated CPI (Capabilities and Preferences Information). (CPI is represented through a profile and determines how far and to what extent to communicate profile information to other web sites). A connection is then established with the origin server using the minimal user profile. It is determined if a privacy policy of the origin server at least meets the privacy preferences of the user, and a second profile (at least one) containing a more detailed CPI is provided to the origin server if the privacy policy of the origin server at least meets the privacy preferences of the user. This concept, may be used in the implementation of the present inventive concept.

It should be noted that the user agent and the intermediary proxy server both can be at the operators environment, i.e. a combined entity, but this is not necessarily the case.

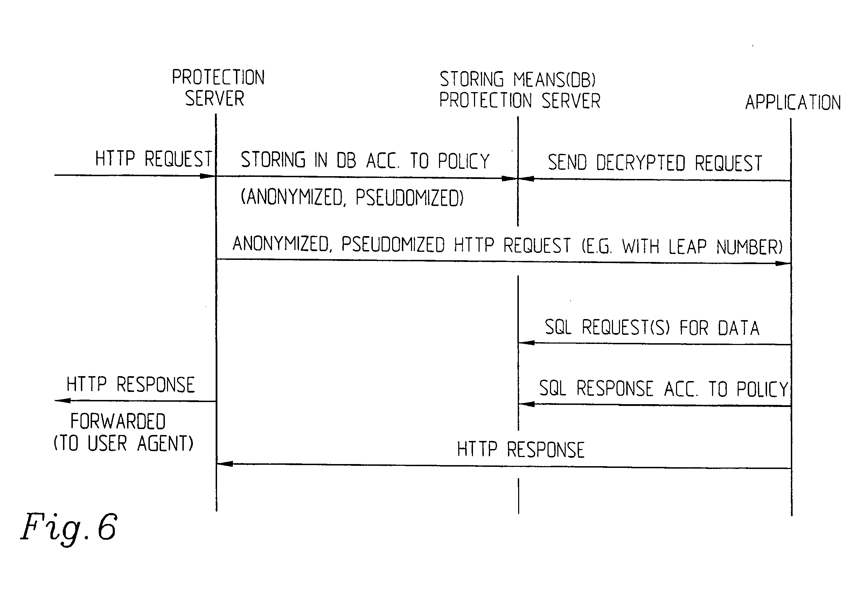

Fig. 6 illustrates the procedure as from the point when a decrypted request is sent from the protection server to the application. The request is particularly a HTTP request, at least containing HTTP information such as IP number etc. If the concept described in Fig. 5 is implemented (user data in header), also such data is included. Further yet, if the request actually is a response to a form defining the required information GET/POST parameters are included (WSP or HTTP GET, POST request).

The protection server with its logic is then responsible for storing data according to agreement, or according to the policy, in the database(s) inside the protection server, or associated with the protection server. This is done in an anonymized and pseudonymized manner. The anonymized, pseudonymized HTTP request is also forwarded to the application, e.g. containing a sequence number or anything that makes it "identifiable". SQL requests for data may then be sent from the application to the protection server (storing means), and responses are provided according to the policy. Finally a HTTP response is provided to the protection server (logic part), which forwards it to the user agent via the intermediary proxy server.

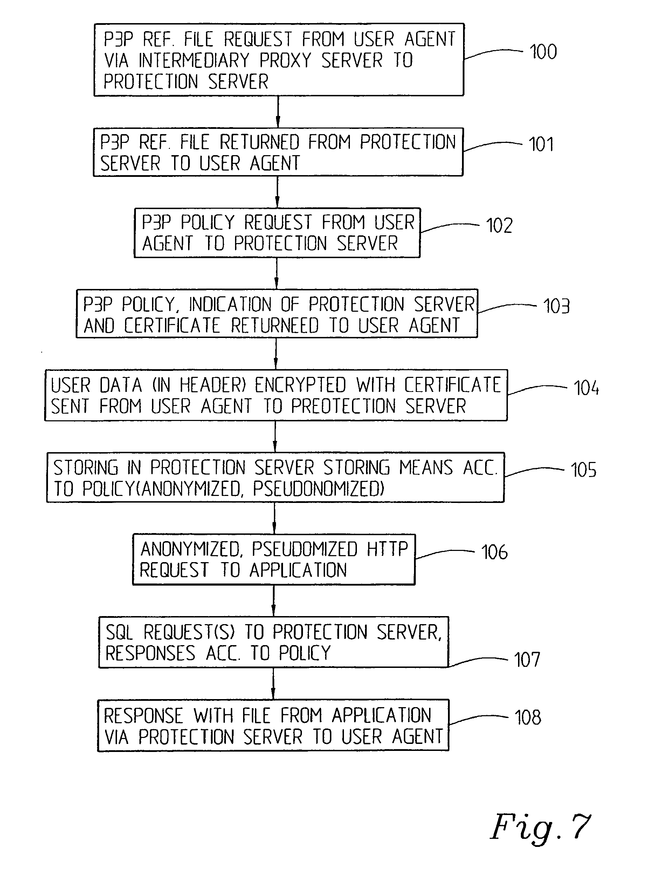

Fig. 7 is a very schematic flow diagram relating to one of the implementations as disclosed in Fig. 5, and according to which P3P is implemented but no certificate verification. It is also supposed that the user agent has a particular intelligence, that the user agent has fetched the policy as indicated by means of XML tags specifying the policy and indicating what data actually is needed such that user data can be sent directly from the user agent (encrypted with the certificate).

Thus, a request for a P3P reference file is sent from the user agent via the intermediary proxy server to the protection server, 100. From the protection server the P3P reference file is then returned, 101. Subsequently a P3P policy request is sent from the user agent to the protection server, 102. The protection server then returns the P3P policy, an indication of the protection server and a certificate to the user agent, 103. Although in this implementation no certificate verification is illustrated, a step might here be included according to which the user agent requests that the intermediary proxy server provides for a verification of the certificate or more generally of the protection server, e.g. as explained earlier in this document, which then returns a response to the user agent. With, or without, verification of the certificate, user data is then sent in the header encrypted by means of the certificate from the user agent to the protection server, 104. The protection server (logic) then provides for appropriate storing in the protection server storing means according to the policy, anonymized and pseudonymized, 105. An anonymized and pseudonymized HTTP request is also sent to the application, 106. SQL requests can then be sent from the application to the protection server, or to the storing means thereof, which then responds according to the policy, 107. Finally a response with the file is sent from the application, via the protection server etc. to the user agent, 108.

The invention is of course not limited to the explicitly illustrated embodiments, but it can be varied in a number of ways within the scope of the appended claims.

## Claims

1. A communication system for protection of end user personal profile data, said system comprising a number of end user stations (1;1A;1B) and a number of service/information/content providers (6;6A;6B),
**characterized in**
**that** it comprises an Intermediary proxy server (2; 2A; 2B) supporting a first communication protocol for end user station communication and comprising means for providing published certificates (3;3A;3B),
a personal profile data protection server (4; 4A; 4B) supporting a second communication protocol for communication with the intermediary proxy server (2;2A;2B) and a third communication protocol for communication with a service/information/content provider (6; 6A; 6B), and an application programming interface (API) allowing service/information/content provider queries/interactions, said protection server (4;4A;4B) comprising storing means (5; 5A; 5B) comprising a number of tables (5; 5A₁, 5A₂, 5A₃) or separate holding means for storing of end user specific data and end user personal profile data, and in that the intermediary proxy server (2;2A₁;2B₁) comprises means for verifying the genuinity of a certificate requested over said second communication protocol from the personal profile protection server (4; 4A; 4B) against a published certificate and in that the service/information/content server (6; 6A; 6B) comprises means for requesting, via the API, personal profile data, that the protection server (4; 4A; 4B) comprises means for delivering personal profile data according to end user privacy level,
and in that the protection server (4; 4A; 4B) comprises an API allowing service provider (6; 6A; 6B) control of site and page policies.

2. A system according to claim 1,
**characterized in**
**that** the first communications protocol is a secure protocol.

3. A system according to claim 1 or 2,
**characterized in**
**that** the first protocol is HTTP or WSP/HTTPS.

4. A system according to any one of claims 1-3,
**characterized in**
**that** the second communication protocol is a non-secure protocol.

5. A system according to any one of clams 1-3,
**characterized in**
**that** the second protocol is a secure protocol.

6. A system according to any one of the preceding claims,
**characterized in**
**that** the end user station (1; 1A; 1B) is a mobile device or a fixed station.

7. A system according to any one of the preceding claims,
**characterized in**
**that** the intermediary proxy server (2; 2A; 2B) is a HTTP proxy.

8. A system according to any one of the preceding claims,
**characterized in**
**that** the intermediary proxy server (2B) comprises holding means (3B) for holding published certificates.

9. A system according to any one of claims 1-7,
**characterized in**
**that** the intermediary proxy server (2;2A) is adapted to be in communication with external holding means (3A; 3B) holding published certificates.

10. A system according to any one of the preceding claims,
**characterized in**
**that** the intermediary proxy server is located at, or associated with, the end user station.

11. A system according to any one of claims 1-9,
**characterized in**
**that** the intermediary proxy server is located within an intranet or at the operator's premises.

12. A system according to any one of the preceding claims,
**characterized in**
**that** the intermediary proxy server (2; 2A; 2B) comprises a functionality for establishing a security communication agreement allowing to implement an automated way for users to control the use of personal data on visited service providers with the protection server (4; 4A; 4B).

13. A system according to claim 12,
**characterized in**
**that** the end user station is adapted to store the user preferences.

14. A system according to claim 12,
**characterized in**
**that** the intermediary proxy server (2;2A;2B) is adapted to store the user preferences relating to privacy level.

15. A system according to claim 13 or 14,
**characterized in**
**that** separate fast access storing means are provided which are adapted to store the user preferences relating to privacy level after completion of the security communication agreement.

16. A system according to any one of the preceding claims,
**characterized in**
**that** the protection proxy server (4; 4A; 4B) is adapted to provide certificates upon request by said intermediary proxy server (2; 2A; 2B).

17. A system according to claim 16,
**characterized in**
**that** the protection proxy server comprises (4A; 4B), or is associated with, holding means for holding security agreements.

18. A system according to any one of claims 1-17,
**characterized in**
**that** it comprises an API allowing service provider queries to the storing means (5;5A;5B) of the protection server (4;9.A;4B) according to the policy settings of the service provider (6;6A;6B).

19. A system according to claim 18,
**characterized in**
**that** the protection server storing means (5; 5A₁, 5A₂, 5A₃), comprises at least three tables containing information about end user specific data, personal profile data information and statistical data respectively.

20. A system according to claim 18 or 19,
**characterized in**
**that** end user specific data and end user personal profile data is adapted to be provided to the service provider (6; 6A; 6B) without association between the actual end user and the personal profile data of the end user such that the end user cannot be traced.

21. A system according to claim 20,
**characterized in**
**that** the protection proxy server (4; 4A; 4B) comprises means for pseudonymizing statistical information and personal profile information by using a unique pseudo for each URL of the service provider that is requested.

22. A method for protection of end user personal profile data in a communication system with a number of end user stations and a number of service/information/content providers,
**characterized in**
**that** it comprises the steps of:
- registering a certificate for an end user personal profile protection server with a trusted third party,
- providing a request for the certificate from an intermediary proxy server in communication with an end user station using a first communication protocol, to the protection server over a second communication protocol,
- providing a response from the protection server to the intermediary server,
- verifying, in the intermediary proxy server that the certificate is genuine, belonging to the respective protection server and is registered with the trusted third party,
- after confirmation that the protection server/ certificate is genuine,
- storing data in a number of tables in the protection server relating to end user specific data, end user personal profile data,
- allowing the service provider having queried the protection server to retrieve end user data and personal profile data according to policy setting and end user privacy level over an Application Programming Interface and a third communication protocol,
- the protection server providing an API allowing service provider control of site and page policies taking the level of privacy into consideration.

23. The method according to claim 22,
**characterized in**
**that** it further comprises the step of:
- establishing an end user personal profile data security agreement, allowing to implement an automated way for users to control the use of personal data on visited service providers between the intermediary proxy server and the protection server on behalf of the end user and the service provider.

24. The method according to claim 23,
**characterized in**
**that** the agreement comprises a P3P agreement.

25. The method according to claim 23,
**characterized in**
**that** the agreement comprises a natural language agreement.

26. The method according to any one of claims 22-25,
**characterized in**
**that** the first and second communication protocols are secure.

27. The method according to any one of claims 22-26,
**characterized in**
**that** the first and/or second communication protocol is HTTP, WSP or similar, secure version or not.

28. The method according to any one of claims 23-25,
**characterized in**
**that** the end user privacy levels are stored in the end user station or in the intermediary proxy server, and in that they can be separately stored after confirmation of the agreement.

29. The method according to any one of claims 22-28,
**characterized in**
**that** it comprises the steps of:
- providing an API at the protection server,
- using the API for queries to the protection servers from the service provider,
- providing responses over a third communication protocol to the service provider.

30. The method of claim 29,
**characterized in**
**that** it comprises the step of:
- pseudonymizing statistical data and profile information such that end user personal data cannot be associated or tied to the actual end user.

## Patentansprüche

1. Ein Kommunikationssystem zum Schutz von persönlichen Profildaten eines Endnutzers, welches System eine Anzahl von Endnutzerstationen (1; 1A; 1B) und eine Anzahl von Dienst-/Informations-/Inhalts-Anbietern (6; 6A; 6B) umfasst, **dadurch gekennzeichnet, dass** es folgendes umfasst:
einen dazwischen geschalteten bzw. vermittelnden Proxi-Server (2; 2A; 2B), der ein erstes Kommunikationsprotokoll für Kommunikation mit einer Endbenutzerstation unterstützt und Mittel zum Bereitstellen von veröffentlichten Zertifikaten (3; 3A; 3B) umfasst,
einen Schutzserver für persönliche Profildaten (4; 4A; 4B), der ein zweites Kommunikationsprotokoll zur Kommunikation mit dem dazwischen geschalteten Proxi-Server (2; 2A; 2B) und ein drittes Kommunikationsprotokoll zur mit einem Dienst-/informations-/Inhalts-Anbieter (6; 6A; 6B) unterstützt, und
eine Anwendungsprogrammschnittstelle (API, Englisch: Application Programming Interface), die Abfragen/-Interaktionen von einen Dienst-/Informations-/Inhalts-Anbieter erlaubt,
wobei der Schutzserver (4; 4A; 4B) Speichermittel (5; 5A; 5B) mit einer Anzahl von Tabellen (5; 5A₁, 5A₂, 5A₃) oder separate Haltemittel zum Speichern von spezifischen Daten des Endnutzers und persönlichen Profildaten des Endnutzers umfasst, und **dadurch** dass
der dazwischen geschaltete Proxi-Server (2; 2A₁; 2B₁) Mittel umfasst zum Überprüfen der Echtheit eines Zertifikats, das über das zweite Kommunikationsprotokoll von dem Schutzserver (4; 4A; 4B) für persönliche Profile gegen ein veröffentlichtes Zertifikat angefordert hat, und **dadurch** dass
der Dienst-/Informations-/Inhalts-Server (6; 6A; 6B) Mittel umfasst zum Anfragen von persönlichen Profildaten über die API, dass
der Schutzserver (4; 4A; 4B) Mittel umfasst zum Ausliefern von persönlichen Profildaten gemäß dem Grad des Datenschutzes des Endnutzers,
und **dadurch** dass der Schutzserver (4; 4A; 4B) eine API umfasst, die eine Steuerung von Betriebs - und Seitenarundsätzen (Englisch: Site and Page Policies) durch den Dienst-Anbieter (6; 6A; 6B) ermöglicht.

2. Ein System nach Anspruch 1, **dadurch gekennzeichnet, dass** das erste Kommunikationsprotokoll ein sicheres Protokoll ist.

3. Ein System nach Anspruch 1 oder 2, **dadurch gekennzeichnet, dass** das erste Protokoll HTTP oder WSP/HTTPS ist.

4. Ein System nach einem der Ansprüche 1 bis 3, **dadurch gekennzeichnet, dass** das zweite Kommunikationsprotokoll ein nicht-sicheres Protokoll ist.

5. Ein System nach einem der Anspruche 1 bis 3, **dadurch gekennzeichnet, dass** das zweite Protokoll ein sicheres Protokoll ist.

6. Ein System nach einem der vorhergehenden Ansprüche, **dadurch gekennzeichnet, dass** die Endnutzerstation (1; 1A; 1B) ein mobiles Gerät oder eine feste Station ist.

7. Ein System nach einem der vorhergehenden Ansprüche, **dadurch gekennzeichnet, dass** der dazwischen geschaltete Proxy-Server (2; 2A; 2B) ein HTTP Proxy ist.

8. Ein System nach einem der vorhergehenden Ansprüche, **dadurch gekennzeichnet, dass** der dazwischen geschaltete Proxy-Server (2B) Haltemittel (3B) zum Halten von veröffentlichten Zertifikaten umfasst.

9. Ein System nach einem der Ansprüche 1 bis 7, **dadurch gekennzeichnet, dass** der dazwischen geschaltete Proxy-Server (2; 2A) dazu ausgebildet ist, in Kommunikation mit externen, veröffentlichte Zertifikate haltenden Haltemitteln (3A; 3B) zu sein.

10. Ein System nach einem der vorhergehenden Ansprüche, **dadurch gekennzeichnet, dass** der dazwischengeschaltete Proxy-Server an der Endbenutzerstation angeordnet ist oder mit der Endbenutzerstation assoziiert ist.

11. Ein System nach einem der Ansprüche 1 bis 9, **dadurch gekennzeichnet, dass** der dazwischen geschaltete Proxy-Server innerhalb eines Intranets oder in den Räumlichkeiten des Betreibers angeordnet ist.

12. Ein System nach einem der vorhergehenden Ansprüche, **dadurch gekennzeichnet, dass** der dazwischen geschaltete Proxy-Server (2; 2A; 2B) eine Funktionalität umfasst zum Erstellen einer Sicherheitskommunikationsübereinkunft, die es ermöglicht, mit dem Schutzserver (4; 4A; 4B) eine automatisierte Verfahrensweise für Benutzer zum Steuern der Benutzung von persönlichen Daten bei besuchten Dienst-Anbietern zu implementieren.

13. Ein System nach Anspruch 12, **dadurch gekennzeichnet, dass** die Endnutzerstation dazu ausgebildet ist, die Präferenzen des Benutzers zu speichern.

14. Ein System nach Anspruch 12, **dadurch gekennzeichnet, dass** der dazwischen geschaltete Proxy-Server (2; 2A; 2B) dazu ausgebildet ist, auf den Grad des Datenschutzes bezogene Benutzerpräferenzen zu speichern.

15. Ein System nach Anspruch 13 oder 14, **dadurch gekennzeichnet, dass** separate Speichermittel mit schnellem Zugang bereitgestellt werden, die dazu ausgebildet sind, die auf den Grad des Datenschutzes bezogenen Benutzerpräferenzen nach der Vervollständigung der Sicherheitskommunikationsübereinkunft zu speichern.

16. Ein System nach einem der vorhergehenden Ansprüche, **dadurch gekennzeichnet, dass** der Schutzproxy-Server (4; 4A; 4B) dazu ausgebildet ist, Zertifikate auf Anfrage des dazwischen geschalteten Proxy-Servers (2; 2A, 2B) bereitzustellen.

17. Ein System nach Anspruch 16, **dadurch gekennzeichnet, dass** der Schutzproxy-Server (4A; 4B) Haltemittel zum Halten von Sicherheitsübereinkünften umfasst oder damit assoziiert ist,

18. Ein System nach einem der Ansprüche 1 bis 17, **dadurch gekennzeichnet, dass** es eine API umfasst, die Dienst-Anbieter-Anfragen an die Speichermittel (5; 5A; 5B) des Schutzservers (4; 4A; 4B) gemäß den Grundsatz-Einstellungen des Dienst-Anbieters (6; 6A; 6B) ermöglicht.

19. Ein System nach Anspruch 18, **dadurch gekennzeichnet, dass** die Speichermittel (5; 5A₁, 5A₂, 5A₃) des Schutzservers mindestens drei Tabellen umfassen, die jeweils Information über spezifische Daten von Endnutzern, Information über persönliche Profildaten und statistische Daten enthalten.

20. Ein System nach Anspruch 18 oder 19, **dadurch** gekennzeichent, dass die spezifischen Daten über Endnutzer und die persönlichen Profildaten von Endnutzern dazu ausgebildet sind, dem Dienst-Anbieter (6; 6A; 6B) bereitgestellt zu werden, ohne Zuordnung zwischen dem tatsächlichen Endnutzer und den persönlichen Profildaten des Endnutzers, so dass der Endnutzer nicht verfolgt werden kann.

21. Ein System nach Anspruch 20, **dadurch gekennzeichnet, dass** der Schutzproxy-Server (4; 4A, 4B) Mittel umfasst zum Pseudonymisieren von statistischer Information und Information über persönliche Profile durch Verwenden eines eindeutigen Pseudos für jede URL des Dienst-Anbieters, der angefordert wird.

22. Ein Verfahren zum Schutz von persönlichen Profildaten von Endnutzern in einem Kommunikationssystem mit einer Anzahl von Endnutzerstationen und einer Anzahl von Dienst-/Informations-/Inhaltsanbietern, **dadurch gekennzeichnet, dass** es die folgenden Schritte umfasst:
- Registrieren eines Zertifikats für einen Schutzserver für persönliche Profile von Endnutzern bei einem vertrauenswürdigen Dritten,
- Bereitstellen einer Anforderung für das Zertifikat an den Schutzserver über ein zweites Kommunikationsprotokoll von einem dazwischen geschalteten Proxy-Server in Kommunikation mit einer Endnutzerstation unter Benutzung eines ersten Kommunrkatronsprotokolls,
- Bereitstellen einer Antwort von dem Schutzserver an den dazwischen geschalteten Server,
- Überprüfen, in dem dazwischen geschalteten Proxy-Server, dass das Zertifikat echt ist, zu dem entsprechenden Schutzserver gehört und bei dem vertrauenswürdigen Dritten registriert ist,
- nach der Überprüfung, dass das Schutzserver-Zertifikat echt ist,
- Speichern von Daten in einer Anzahl von Tabellen in den Schutzserver, wobei sich die Tabellen auf spezifische Daten des Endnutzers und persönliche Profildaten des Endnutzers beziehen,
- Ermöglichen, dass der Dienstanbieter, der den Schutzserver angerufen hat, Endnutzerdaten und persönliche Profildaten gemäß den Grundsatz-Einstellungen und dem Grad des Datenschutzes des Endnutzers über eine Anwendungsprogrammschnittstelle (Englisch: Application Programming Interface) und ein drittes Kommunikationsprotokoll abruft,
- der Schutzserver einer API die Steuerung durch den Dienstanbieter von Betriebs- und Sertengrundsätzen (Englisch: Site and Page Policies) bereitstellt, wobei der Grad an Geheimhaltung berücksichtigt wird.

23. Das Verfahren nach Anspruch 22, **dadurch gekennzeichnet, dass** es ferner die folgenden Schritte umfasst:
- Errichten einer Sicherheitsübereinkunft für persönliche Profildaten eines Endnutzers, die es ermöglicht, eine automatisierte Verfahrensweise für Nutzer zu implementieren, um die Benutzung von persönlichen Daten auf besuchten Dienstanbietern zwischen dem dazwischen geschalteten Proxy-Server und dem Schutzserver im Namen des Endnutzers und des Dienstanbieters zu steuern.

24. Das Verfahren nach Anspruch 23, **dadurch gekennzeichnet**, das die Übereinkunft eine P3P Übereinkunft umfasst.

25. Das Verfahren nach Anspruch 23, **dadurch gekennzeichnet, dass** die Übereinkunft eine Übereinkunft in natürlicher Sprache umfasst.

26. Das Verfahren nach einem der Ansprüche 22 bis 25, **dadurch gekennzeichnet, dass** das erste und zweite Kommunikationsprotokoll sicher sind.

27. Das Verfahren nach einem der Ansprüche 22 bis 26, **dadurch gekennzeichnet**, das erste und/oder zweite Kommunikationsprotokoll HTTP, WSP oder ein vergleichbares ist, unabhängig davon, ob es eine sichere Version ist oder nicht.

28. Das Verfahren nach einem der Ansprüche 23 bis 25, **dadurch gekennzeichnet, dass** die Grade der Geheimhaltung von Endnutzern in der Endnutzerstation oder in dem dazwischen geschalteten Proxy-Server gespeichert sind, und **dadurch** dass sie nach der Bestätigung der Übereinkunft separat gespeichert werden können.

29. Das Verfahren nach einem der Ansprüche 22 bis 28, **dadurch gekennzeichnet, dass** es die folgenden Schritte umfasst:
- Bereitstellen einer API an den Schutzserver,
- Benutzen der API für Anfragen an den Schutzserver aus dem Dienst-Anbieter
- Bereitstellen von Antworten über den Eintritt des Kommunikationsprotokolls bei dem Dienstanbieter.

30. Das Verfahren nach Anspruch 29, **dadurch gekennzeichnet, dass** es den folgenden Schritt umfasst:
- Pseudonymisieren von statistischen Daten und Profilinformation, so dass persönliche Daten von Endnutzern nicht mit tatsächlichen Endnutzer assoziiert werden können mit, oder bezogen werden können, auf.

## Revendications

1. Système de communication pour la protection de données de profil personnel d'utilisateur final, ce système comprenant un certain nombre de stations d'utilisateur final (1; 1A; 1B) et un certain nombre de fournisseurs de services / informations / contenus (6; 6A; 6B),
**caractérisé**
**en ce qu'**il comprend un serveur mandataire intermédiaire (2; 2A; 2B) supportant un premier protocole de communication pour la communication de station d'utilisateur final et comprenant un moyen pour fournir des certificats publiés (3; 3A; 3B),
un serveur de protection de données de profil personnel (4; 4A; 4B) supportant un deuxième protocole de communication pour la communication avec le serveur mandataire intermédiaire (2; 2A; 2B) et un troisième protocole de communication pour la communication avec un fournisseur de services / informations / contenus (6; 6A; 6B), et une interface de programmation d'application (API) permettant des interrogations / interactions de fournisseur de services / informations / contenus, le serveur de protection (4; 4A; 4B) comprenant un moyen de stockage (5; 5A; 5B) comprenant un certain nombre de tables (5; 5A₁, 5A₂, 5A₃) ou un moyen de conservation séparé pour stocker des données spécifiques à un utilisateur final et des données de profil personnel d'utilisateur final, et en ce que le serveur mandataire intermédiaire (2; 2A₁; 2B₁) comprend un moyen pour vérifier l'authenticité d'un certificat demandé par l'intermédiaire du deuxième protocole de communication, à partir du serveur de protection de profil personnel (4; 4A; 4B), en échange d'un certificat publié, et en ce que le serveur de services /informations / contenus (6; 6A; 6B) comprend un moyen pour demander, par l'intermédiaire de l'API, des données de profil personnel, et le serveur de protection (4; 4A; 4B) comprend un moyen pour fournir des données de profil personnel conformément à un niveau de confidentialité d'utilisateur final,
et **en ce que** le serveur de protection (4; 4A; 4B) comprend une API permettant une commande de règles de site et de page par un fournisseur de services (6; 6A; 6B).

2. Système selon la revendication 1,
**caractérisé**
**en ce que** le premier protocole de communication est un protocole sécurisé.

3. Système selon la revendication 1 ou 2,
**caractérisé**
**en ce que** le premier protocole est HTTP ou WSP/HTTPS.

4. Système selon l'une quelconque des revendications 1-3,
**caractérisé**
**en ce que** le deuxième protocole de communication est un protocole non sécurisé.

5. Système selon l'une quelconque des revendications 1-3,
**caractérisé**
**en ce que** le deuxième protocole est un protocole sécurisé;

6. Système selon l'une quelconque des revendications précédentes,
**caractérisé**
**en ce que** la station d'utilisateur final (1; 1A; 1B) est un dispositif mobile ou une station fixe.

7. Système selon l'une quelconque des revendications précédentes,
**caractérisé**
**en ce que** le serveur mandataire intermédiaire (2; 2A; 2B) est un mandataire HTTP.

8. Système selon l'une quelconque des revendications précédentes,
**caractérisé**
**en ce que** le serveur mandataire intermédiaire (2B) comprend un moyen de conservation (3B) pour conserver des certificats publiés.

9. Système selon l'une quelconque des revendications 1-7,
**caractérisé**
**en ce que** le serveur mandataire intermédiaire (2; 2A) est adapté pour être en communication avec un moyen de conservation externe (3A; 3B) conservant des certificats publiés.

10. Système selon l'une quelconque des revendications précédentes,
**caractérisé**
**en ce que** le serveur mandataire intermédiaire est situé à la station d'utilisateur final, ou est associé à celle-ci.

11. Système selon l'une quelconque des revendications 1-9,
**caractérisé**
**en ce que** le serveur mandataire intermédiaire est situé dans un intranet ou dans un local de l'opérateur.

12. Système selon l'une quelconque des revendications précédentes,
**caractérisé**
**en ce que** le serveur mandataire intermédiaire (2; 2A; 2B) comprend une fonctionnalité pour établir un accord de communication sécurisée permettant de mettre en oeuvre un mode automatisé pour permettre à des utilisateurs de commander l'utilisation de données personnelles sur des fournisseurs de services visités, avec le serveur de
protection (4; 4A; 4B).

13. Système selon la revendication 12,
**caractérisé**
**en ce que** la station d'utilisateur final est adaptée pour stocker les préférences de l'utilisateur.

14. Système selon la revendication 12,
**caractérisé**
**en ce que** le serveur mandataire intermédiaire (2; 2A; 2B) est adapté pour stocker les préférences de l'utilisateur concernant un niveau de confidentialité.

15. Système selon la revendication 13 ou 14,
**caractérisé**
**en ce que** des moyens de stockage à accès rapide, séparés, sont incorporés et sont adaptés pour stocker les préférences de l'utilisateur concernant le niveau de confidentialité, après l'établissement de l'accord de communication sécurisée.

16. Système selon l'une quelconque des revendications précédentes,
**caractérisé**
**en ce que** le serveur mandataire de protection (4; 4A; 4B) est adapté pour fournir des certificats à la demande du serveur mandataire intermédiaire (2; 2A; 2B).

17. Système selon la revendication 16,
**caractérisé**
**en ce que** le serveur mandataire de protection (4A; 4B) comprend un moyen de conservation pour conserver des accords de sécurité, ou est associé à un tel moyen.

18. Système selon l'une quelconque des revendications 1-17,
**caractérisé**
**en ce qu'**il comprend une API permettant des interrogations de fournisseur de services adressées au moyen de stockage (5; 5A; 5B) du serveur de protection (4; 4A; 4B), conformément aux règles établies du fournisseur de services (6; 6A; 6B).

19. Système selon la revendication 18,
**caractérisé**
**en ce que** le moyen de stockage (5; 5A₁, 5A₂, 5A₃) du serveur de protection comprend au moins trois tables contenant respectivement de l'information concernant des données spécifiques à l'utilisateur final, de l'information de données de profil personnel et des données statistiques.

20. Système selon la revendication 18 ou 19,
**caractérisé**
**en ce que** les données spécifiques à l'utilisateur final et les données de profil personnel d'utilisateur sont adaptées pour être fournies au fournisseur de services (6; 6A; 6B) sans association entre l'utilisateur final réel et les données de profil personnel de l'utilisateur final, de façon qu'il ne soit pas possible de remonter à l'utilisateur final.

21. Système selon la revendication 20,
**caractérisé**
**en ce que** le serveur mandataire de protection (4; 4A; 4B) comprend un moyen pour attribuer des pseudonymes à l'information statistique et à l'information de profil personnel, en utilisant un pseudonyme spécifique pour chaque URL du fournisseur de services qui est demandée.

22. Procédé pour la protection de données de profil personnel d'utilisateur final dans un système de communication avec un certain nombre de stations d'utilisateur final et un certain nombre de fournisseurs de services / informations / contenus;
**caractérisé**
**en ce qu'**il comprend les étapes consistant à :
- enregistrer auprès d'un tiers de confiance un certificat pour un serveur de protection de profil personnel d'utilisateur final,
- fournir au serveur de protection, sur un deuxième protocole de communication, une demande pour le certificat, à partir d'un serveur mandataire intermédiaire en communication avec une station d'utilisateur final en utilisant un premier protocole de communication,
- fournir une réponse au serveur intermédiaire, à partir du serveur de protection,
- vérifier, dans le serveur mandataire intermédiaire, que le certificat est authentique, appartient au serveur de protection respectif et est enregistré auprès du tiers de confiance,
- après confirmation du fait que le serveur de protection /certificat est authentique,
- stocker des données dans un certain nombre de tables dans le serveur de protection, concernant des données spécifiques à l'utilisateur final et des données de profil personnel d'utilisateur,
- permettre au fournisseur de services ayant interrogé le serveur de protection, d'extraire des données d'utilisateur final et des données de profil personnel, conformément à des règles établies et un niveau de confidentialité d'utilisateur final, sur une Interface de Programmation d'Application (Application Programming Interface) et un troisième protocole de communication,
- fournir, par le serveur de protection, une API permettant une commande par le fournisseur de services de règles de site et de page prenant en considération le niveau de confidentialité.

23. Procédé selon la revendication 22,
**caractérisé**
**en ce qu'**il comprend en outre l'étape consistant à :
- établir un accord de sécurité de données de profil personnel d'utilisateur final, permettant de mettre en oeuvre un mode automatisé pour permettre à des utilisateurs de commander l'utilisation de données personnelles sur des fournisseurs de services visités, entre le serveur mandataire intermédiaire et le serveur de protection, pour le compte de l'utilisateur final et du fournisseur de services.

24. Procédé selon la revendication 23,
**caractérisé**
**en ce que** l'accord comprend un accord P3P.

25. Procédé selon la revendication 23,
**caractérisé**
**en ce que** l'accord comprend un accord en langage naturel.

26. Procédé selon l'une quelconque des revendications 22-25,
**caractérisé**
**en ce que** les premier et deuxième protocoles de communication sont sécurisés.

27. Procédé selon l'une quelconque des revendications 22-26,
**caractérisé**
**en ce que** le premier et/ou le deuxième protocole de communication est HTTP, WSP ou similaire, version sécurisée ou non.

28. Procédé selon l'une quelconque des revendications 23-25,
**caractérisé**
**en ce que** les niveaux de confidentialité d'utilisateur final sont stockés dans la station d'utilisateur final ou dans le serveur mandataire intermédiaire, et en ce qu'ils peuvent être stockés séparément après confirmation de l'accord.

29. Procédé selon l'une quelconque des revendications 22-28,
**caractérisé**
**en ce qu'**il comprend les étapes suivantes :
- fournir une API au serveur de protection,
- utiliser l'API pour des interrogations adressées au serveur de protection à partir du fournisseur de services,
- fournir des réponses au fournisseur de services, sur un troisième protocole de communication.

30. Procédé selon la revendication 29,
**caractérisé**
**en ce qu'**il comprend l'étape consistant à :
- attribuer des pseudonymes à des données statistiques et de l'information de profil, de façon que des données personnelles d'utilisateur final ne puissent pas être associées ou liées à l'utilisateur final réel.
